# DEMANDE DE BREVET EUROPEEN

(11) **EP 1 533 727 A1**
(43) Date de publication de la demande: **25.05.2005**
(21) Numéro de dépôt: 03292871.5
(22) Date de dépôt: 19.11.2003
(51) Int. Cl.: G06F 17/60, H04L 12/14

(54) **Système et procédé de taxation basé sur les services dans un réseau de données en mode paquets utilisant des identifiants dans les en-têtes des paquets**

(71) Demandeur: FRANCE TELECOM, 75015 Paris (FR)
(72) Inventeur: Bibas, Alain, 75020 Paris (FR)
(74) Mandataire: de la Bigne, Guillaume Michel Marie

(57) **Abrégé**

L'invention concerne un système de taxation d'un service multimédia fourni par l'échange de données en mode paquet, entre un terminal mobile d'accès (10) au service et un fournisseur de ce service (12). Le système comprend d'une part, des moyens de collecte (22) d'informations sur les ressources réseau consommées pour réaliser l'échange, d'autre part, des moyens de calcul du coût (26) du service à partir des informations fournies par les moyens de collecte.

Il comporte en outre des moyens d'analyse (24) du contenu d'au moins un paquet de données échangé pour en extraire des informations propres au service fourni, et les moyens de calcul (26) sont des moyens de calcul du coût du service également à partir des informations propres au service fourni.

L'invention concerne également un procédé de taxation d'un service multimédia mis en oeuvre par ce système.

## Description

L'invention concerne un système de taxation d'un service multimédia fourni par l'échange de données en mode paquet, entre un terminal mobile d'accès au service et un fournisseur de ce service.

La présente invention s'applique plus particulièrement dans le cas de systèmes GPRS ou UMTS de téléphonie mobile.

Plus précisément l'invention concerne un tel système de taxation, du type comprenant :
- des moyens de collecte d'informations sur les ressources réseau consommées pour réaliser l'échange,
- des moyens de calcul du coût du service à partir des informations fournies par les moyens de collecte.

L'invention concerne également un procédé correspondant.

Il est connu d'établir le coût d'un service à partir d'informations relatives à l'utilisation des ressources réseau consommées pour réaliser le service.

Les ressources réseau consommées sont d'une part le volume des données échangées, utilisant une partie de la mémoire des noeuds des réseaux par lesquels transitent les données, et d'autre part la durée de réalisation du service.

En général, pour des problèmes de taxation, un service d'un fournisseur est souvent identifié par un point d'accès au réseau (APN) unique. Établir une connexion revient donc à gérer le transfert des données entre le terminal mobile et le point d'accès au réseau. De façon classique, le mode de taxation dépend uniquement de l'APN.

Cette méthode de taxation est difficile à mettre en oeuvre si l'on souhaite augmenter le nombre de services disponibles. En effet, afin d'effectuer une taxation différenciée pour chacun des services, on doit multiplier le nombre d'APN. Or, ce nombre est limité notamment au niveau du terminal mobile.

Un solution pour augmenter le nombre de services sans augmenter le nombre d'APN utilisés peut être d'associer plusieurs services à un seul APN. Mais cette solution ne permet pas de mettre en place une taxation différenciée suivant le type de service.

L'invention vise à remédier à ces inconvénients en proposant un système qui ne nécessite pas de recourir à une multiplication des APN lorsque le nombre de services disponibles augmente.

A cet effet, l'invention a pour objet un système de taxation du type précité, caractérisé en ce qu'il comporte en outre des moyens d'analyse du contenu d'au moins un paquet de données pour en extraire des informations propres au service fourni, et en ce que les moyens de calcul sont des moyens de calcul du coût du service également à partir des informations propres au service fourni.

Dans un tel système, la taxation dépend non seulement des informations sur les ressources réseau consommées, mais aussi du contenu du service lui-même.

L'invention peut en outre comporter l'une ou plusieurs des caractéristiques suivantes :
- le système de taxation comprend de plus des moyens de stockage de règles de taxation sélectionnables par les moyens de calcul,
- les informations propres au service fourni comprennent un identifiant du service, un identifiant du type du contenu multimédia échangé et un identifiant d'un réseau de transport des données,
- le système de taxation comprend de plus des moyens de notification au terminal du coût du service, déterminé par les moyens de calcul.

L'invention concerne également un procédé de taxation d'un service multimédia fourni par l'échange de données en mode paquets, entre un terminal mobile d'accès au service et un fournisseur de ce service, comprenant les étapes suivantes :
- on collecte des informations sur les ressources réseau consommées pour réaliser l'échange,
- on calcule un coût du service à partir des informations collectées,
caractérisé en ce qu'il comprend en outre une étape d'analyse du contenu d'au moins un paquet de données échangé pour en extraire des informations propres au service fourni, et en ce que, lors de l'étape de calcul, on calcule le coût du service également à partir des informations propres au service fourni.

Le procédé selon l'invention peut en outre comporter l'une ou plusieurs des caractéristiques suivantes :
- l'étape de calcul comporte une étape de choix, en fonction des informations propres au service fourni, d'une règle de taxation, cette dernière appartenant à un ensemble de règles de taxation prédéterminées,
- on extrait l'identifiant de service à partir d'au moins un en-tête d'un paquet de données, cet en-tête correspondant aux niveaux Réseau et Transport du modèle OSI,
- on extrait l'identifiant de contenu à partir d'au moins un en-tête d'un paquet de données, cet en-tête correspondant au niveau Application du modèle OSI.

L'invention sera mieux comprise à la lecture de la description qui va suivre, donnée uniquement à titre d'exemple et faite en se référant aux dessins annexés dans lesquels :
- la figure 1 représente schématiquement la structure générale d'un système d'échange de données comportant un système de taxation selon l'invention ;
- la figure 2 représente schématiquement le contenu d'un paquet de données destiné à être analysé par le système de taxation de la figure 1 ;
- la figure 3 représente schématiquement l'enchaînement des étapes d'un procédé de taxation mis en oeuvre par le système selon l'invention.

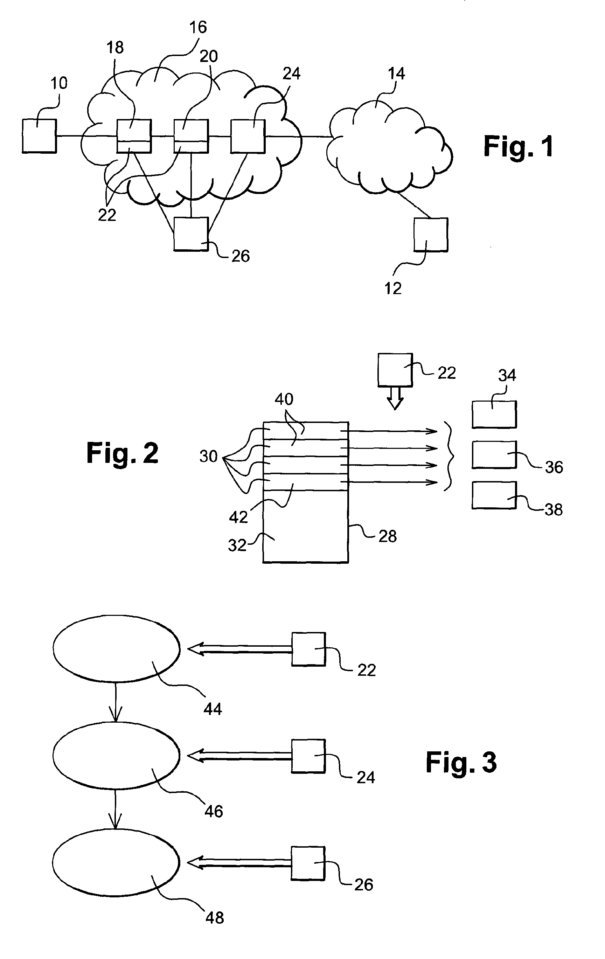

Le système représenté sur la figure 1 comporte un terminal mobile 10, par exemple un téléphone cellulaire conforme au standard GPRS, et un fournisseur de services 12 reliés ensemble par l'intermédiaire d'un réseau de transmission de données en mode paquet (appelé en général réseau IP) 14, par exemple le réseau Internet, et d'un réseau d'opérateur 16.

Plus précisément, le fournisseur de services 12 est directement relié au réseau IP 14, le terminal mobile 10 est directement relié au réseau d'opérateur 16 et le réseau IP 14 et le réseau d'opérateur 16 sont interconnectés entre eux de façon classique.

En général, le réseau d'opérateur 16 comprend plusieurs noeuds de service 18 et plusieurs noeuds passerelles 20. Afin de simplifier la description, un seul noeud passerelle 20 et un seul noeud de service 18 reliés entre eux sont représentés dans le réseau d'opérateur 16 de la figure 1.

Le noeud de service 18 est un routeur qui gère des terminaux mobiles, comme le terminal mobile 10 de la figure 1, dans une zone géographique déterminée. Chaque noeud passerelle 20 est un routeur connecté en général à plusieurs réseaux IP, comme le réseau IP 14 de la figure.

Le routeur 20 achemine vers le noeud de service 18 gérant le terminal mobile 10 les paquets de données destinées au terminal mobile 10 provenant du réseau IP 14.

Il achemine également vers le réseau IP 14 les paquets de données destinées au fournisseur de services 12 provenant du terminal mobile 10.

Le noeud de service 18 et le noeud passerelle 20 comportent chacun des moyens 22 de collecte d'informations sur les ressources réseau consommées pour réaliser l'échange de données en mode paquet entre le terminal mobile 10 et le fournisseur de services 12.

En général, les informations sur les ressources consommées sont d'une part le volume des données échangées, qui vont nécessiter de la mémoire disponible sur le réseau d'opérateur 16, et d'autre part la durée de réalisation de l'échange, pendant laquelle le réseau d'opérateur 16 doit gérer la connexion entre le terminal mobile 10 et le fournisseur de services 12.

Le système de taxation comprend en outre, entre le noeud passerelle 20 et le réseau IP 14 du réseau d'opérateur 16, des moyens d'analyse 24 d'au moins un paquet de données échangé pour en extraire des informations propres au service fourni.

Le système de taxation comprend de plus des moyens 26 de calcul du coût à partir des informations fournies par les moyens de collecte 22 et également à partir des informations propres au service fourni.

Dans une variante de l'invention, les moyens d'analyse 24 sont également des moyens de notification au terminal mobile 10 du coût du service, déterminé par les moyens de calcul 26.

La fonction, selon une variante de l'invention, des moyens d'analyse 24 sera mieux comprise en se référant à la figure 2, sur laquelle un paquet de données 28 est représenté.

Le paquet de données 28 comprend des en-têtes 30 et les données 32 elles-mêmes. Une partie des en-têtes 30 correspond aux en-têtes définis par le modèle OSI.

Les moyens d'analyse 24 extraient les informations propres au service fourni à partir de ces en-têtes 30.

Par exemple, les informations propres au service fourni comprennent un identifiant du service 34, un identifiant du type du contenu multimédia échangé 36 et un identifiant d'un réseau de transport des données 38.

L'identifiant du service 34 peut correspondre au type de protocole utilisé, comme par exemple les protocoles MMS, WAP, RTSP, FTP, SMTP.

L'identifiant du type de contenu multimédia échangé 36 permet de différencier par exemple un téléchargement de fichiers texte, audio (mp3,...), image (JPEG,...) ou vidéo (AVI,...).

L'identifiant d'un réseau de transport des données 38 correspond généralement au type de réseau d'opérateur 16 utilisé, par exemple un réseau de type GPRS, CSD, UMTS, WLAN, etc.

L'identifiant du service 34 peut être extrait à partir des en-têtes 40 correspondant aux niveaux Réseau et Transport du modèle OSI, et l'identifiant du contenu multimédia 36 peut être extrait à partir d'un en-tête 42 correspondant au niveau Application du modèle OSI.

L'identifiant d'un réseau de transport des données 38 peut être extrait à partir d'en-têtes (non représentés sur la figure) correspondant à un protocole utilisé par le réseau d'opérateur 16.

En se référant à la figure 3, un procédé mis en oeuvre par le système selon l'invention consiste tout d'abord à collecter des informations (étape 44) sur les ressources réseau consommées pour réaliser l'échange de paquets de données, grâce aux moyens 22.

On analyse (étape 46) ensuite le contenu d'au moins un paquet de données 28 échangé pour en extraire des informations propres au service fourni, par exemple l'identifiant du service 34, l'identifiant du type du contenu multimédia échangé 36 et l'identifiant d'un réseau de transport des données 38, grâce aux moyens 24.

On calcule (étape 48) finalement le coût du service, grâce aux moyens de calcul 26, à partir des informations fournies par les moyens de collecte 22 et également à partir des informations propres au service fourni, les informations propres au service fourni étant déterminées par les moyens d'analyse 24.

Les moyens de calcul 26 choisissent, en fonction des informations propres au service, une règle de taxation parmi un ensemble de règles de taxation prédéterminées par l'opérateur. Les règles de taxation sont par exemple stockées dans une mémoire (non représentée sur les figures) accessible en lecture par les moyens de calcul 26.

Ces règles prennent en compte des informations sur les ressources réseau consommées, des informations propres au service et également des informations sur le type d'abonnement de l'utilisateur du terminal mobile 10.

Les moyens de calcul 26 appliquent la règle de taxation choisie pour calculer le coût du service.

Ainsi, le dispositif et procédé associé selon l'invention permettent d'établir des règles de taxation aussi précises que, par exemple :
- "le téléchargement à partir d'un serveur ftp de 100ko de fichier audio mp3 est facturé 1 euro, le téléchargement à partir d'un serveur ftp de 100ko de fichier video mpeg est facturé 2 euros", ou alors
- "un MMS (Multimedia Messaging Service) est facturé 1.5 euro par envoi s'il ne contient que du texte, et facturé 3 euros s'il comporte de la video", ou encore
- "1 euro par minute de connexion à l'internet pour tous les sites visités, mis à part les URL appartenant à l'opérateur qui pourront être visitées gratuitement".

L'invention ne se limite pas au mode de réalisation décrit précédemment.

Dans une variante, les moyens d'analyse 24 peuvent être situés n'importe où sur le chemin par lequel les paquets de données transitent entre le mobile 10 et le fournisseur de service 12.

Dans une autre variante, les informations propres au service fourni peuvent être extraites des données 32 elles-mêmes contenues dans un paquet 28.

## Revendications

1. Système de taxation d'un service multimédia fourni par l'échange de données en mode paquet, entre un terminal mobile (10) d'accès au service et un fournisseur de ce service (12), comprenant :
- des moyens de collecte (22) d'informations sur les ressources réseau consommées pour réaliser l'échange,
- des moyens de calcul (26) du coût du service à partir des informations fournies par les moyens de collecte (22),
**caractérisé en ce qu'**il comporte en outre des moyens d'analyse (24) du contenu d'au moins un paquet (28) de données échangé pour en extraire des informations propres au service fourni, et **en ce que** les moyens de calcul (26) sont des moyens de calcul du coût du service également à partir des informations propres au service fourni.

2. Système de taxation selon la revendication 1, comprenant de plus des moyens de stockage de règles de taxation sélectionnables par les moyens de calcul (26).

3. Système de taxation selon la revendication 1 ou 2, dans lequel les informations propres au service fourni comprennent un identifiant du service (34), un identifiant du type du contenu multimédia échangé (36) et un identifiant d'un réseau de transport des données (38).

4. Système de taxation selon l'une quelconque des revendications 1 à 3, comprenant de plus des moyens de notification au terminal du coût du service, déterminé par les moyens de calcul (26).

5. Procédé de taxation d'un service multimédia fourni par l'échange de données en mode paquet, entre un terminal mobile (10) d'accès au service et un fournisseur de ce service (12), comprenant les étapes suivantes :
- on collecte (44) des informations sur les ressources réseau consommées pour réaliser l'échange,
- on calcule (48) un coût du service à partir des informations collectées,
**caractérisé en ce qu'**il comprend en outre une étape d'analyse (46) du contenu d'au moins un paquet (28) de données échangé pour en extraire des informations propres au service fourni, et **en ce que**, lors de l'étape de calcul (48), on calcule le coût du service également à partir des informations propres au service fourni.

6. Procédé selon la revendication 5, dans lequel l'étape de calcul (48) comporte une étape de choix, en fonction des informations propres au service fourni, d'une règle de taxation, cette dernière appartenant à un ensemble de règles de taxation prédéterminées.

7. Procédé selon la revendication 5 ou 6, dans lequel, les informations propres au service fourni comprenant un identifiant de service (34), on extrait cet identifiant à partir d'au moins un en-tête (40) d'un paquet de données (28), cet en-tête correspondant aux niveaux Réseau et Transport du modèle OSI.

8. Procédé selon l'une quelconque des revendications 5 à 7, dans lequel, les informations propres au service fourni comprenant un identifiant du type du contenu multimédia échangé (36), on extrait cet identifiant à partir d'au moins un en-tête (42) d'un paquet de données (28), cet en-tête correspondant au niveau Application du modèle OSI.
